# EUROPEAN PATENT SPECIFICATION

(11) **EP 3 398 703 B1**
(45) Date of publication and mention of the grant of the patent: **27.05.2020**
(21) Application number: 17169649.5
(22) Date of filing: 05.05.2017
(51) Int. Cl.: B22F 7/06, B23K 35/30, B23K 35/32, C22C 1/10, C22C 5/08, C22C 29/06, B22F 5/00, B22F 3/02, B22F 3/10, B23K 35/00

(54) **A BODY COMPRISING A CERMET PART AND A MANUFACTURING METHOD THEREOF**
KÖRPER AUS CERMET UND VERFAHREN ZUR HERSTELLUNG DAVON
CORPS COMPRENANT UNE PARTIE EN CERMET ET SON PROCÉDÉ DE FABRICATION

(43) Date of publication of application: 07.11.2018
(73) Proprietor: Hyperion Materials & Technologies (Sweden) AB, 126 80 Stockholm (SE)
(72) Inventor: Marshall, Jessica, Coventry, West Midlands CV4 9BB (GB); Sweetman, Gary, Coventry, West Midlands CV6 1AL (GB)
(74) Representative: Neilson, Martin Mark

(56) References cited:
- GB-A- 2 419 618
- JP-A- H0 598 383
- JP-A- S63 256 275
- US-A1- 2010 230 177
- S.G. HUANG ET AL: "Microstructure and tribological performance of NbC-Ni cermets modified by VC and Mo 2 C", INTERNATIONAL JOURNAL OF REFRACTORY METALS AND HARD MATERIALS, vol. 66, 25 March 2017 (2017-03-25), pages 188-197, XP055414449, AMSTERDAM, NL ISSN: 0263-4368, DOI: 10.1016/j.ijrmhm.2017.03.012

## Description

### TECHNICAL FIELD

The present disclosure relates to a body comprising a cermet part, comprising a niobium carbide based hard phase and a nickel based metallic binder, a method for manufacturing the body and the use of the body for reducing the contact angle of a melted braze.

### BACKGROUND

Cemented carbides based on tungsten carbide (WC) are widely used for many applications where high hardness, transverse rupture strength and high fracture toughness are required. However, the supplies of tungsten carbide are declining and consequently its cost is increasing, therefore alternative hard metals are being considered to find suitable alternatives. Cermets based on niobium carbides (NbC) have the potential to be such an alternative hard material in some applications and have also a plentiful supply and are thus cheaper to purchase.

Additionally, NbC based hard material could be used to replace stainless steel tools in applications which are close to the property limits for stainless steel but where WC based cemented carbide are too expensive.

Brazing is commonly used in the manufacture of cemented carbide and cermet tools to join the cemented carbide or cermet cutting tip to a steel shank or to another piece of cemented carbide or cermet with a different geometry and / or composition.

However, for a cermet part containing a niobium carbide based hard phase and a nickel based metallic binder, there is a problem in using brazing methods which are commonly used for cemented carbides comprising tungsten carbide as the contact angle of a melted braze alloy will be greater than 90° meaning that the brazeability of the cermet part is poor and thus a strong
joint will not be formed. JP H05 98383 A and "Microstructure and tribological performance of NbC-Ni cermets modified by VC and Mo2C", S.G. Huang, J. Vleugels, H. Mohrbacher, M. Woydt, International Journal of Refractory Metals & Hard Materials, Vol. 66, pp. 188-197, 25.03.2017, XP085251339 relate to a niobium carbide based cermet to be brazed to a substrate, wherein the cermet contains a nickel binder and at least 0.5 atomic of molybdenum. Those documents fail however to disclose a silver based braze alloy.

The aim of the present disclosure is to provide a solution which will reduce or even eliminate the problems mentioned above.

### SUMMARY

Thus, the present disclosure therefore provides a body comprising:
a niobium carbide based cermet part containing a nickel based metallic binder;
a silver based braze alloy; and
at least one other part selected from a cermet, a cemented carbide or a part comprising a steel to which the cermet part is to be brazed to;
characterized in that the cermet part contains at least 0.5 atomic % (at%) molybdenum.

Furthermore, the present disclosure also relates to a method of brazing a niobium carbide based cermet part, which cermet part contains a nickel based metallic binder and at least 0.5 atomic percent molybdenum, to at least one other part selected from a cermet, a cemented carbide or a part comprising steel, the method comprising the steps of:
a. providing a hard phase powder comprising more than 50 weight % (wt%) niobium carbide based on the total amount of the hard phase powder;
b. providing a metallic binder powder comprising more than 50 wt% nickel based of the total amount of the metallic binder powder;
c. mixing the hard phase powder and the metallic binder powder with an organic binder to obtain a powder mixture;
d. milling the obtained powder mixture;
e. pressing the milled powder mixture;
f. sintering the pressed powder mixture to obtain a sintered cermet part;
g. providing a silver based braze alloy; and
h. brazing the obtained sintered cermet part to at least one other part by using the silver based braze alloy;
characterized in that in step c. either:
a powder of molybdenum carbide (MoC) is added or
a powder of molybdenum and a powder of carbon are added
such that the cermet part contains at least 0.5 atomic percent molybdenum.

Thus, the present disclosure will provide a method which will make it possible to braze a niobium carbide based cermet part containing a nickel based metallic binder, to at least one other part.

Additionally, the present disclosure also relates to the use of a niobium carbide based cermet part, said cermet contains a nickel based metallic binder and molybdenum for reducing a contact angle to less than 90° of a melted braze alloy during the method wherein the cermet part is brazed to at least one other part selected from a cermet, a cemented carbide or a part comprising steel using a silver based braze alloy; wherein the contact angle is the angle between a first line drawn along a surface of the cermet part and a second line drawn extending from the contact point with a surface of the melted braze alloy based on an optical image of the melted braze alloy on said surface after it has cooled and in a protective atmosphere.

### BRIEF DESCRIPTION OF DRAWINGS

Figure 1: discloses an annotated optical image of the melted braze alloy on the surface of the cermet showing how the contact angle is measured;
Figure 2: discloses an optical image of sample A showing the contact angle of the braze;
Figure 3: discloses an optical image of sample B showing the contact angle of the braze;
Figure 4: discloses an optical image of sample C showing the contact angle of the braze;
Figure 5: discloses an optical image of sample D showing the contact angle of the braze;
Figure 6: discloses an optical image of sample E showing the contact angle of the braze;
Figure 7: discloses an optical image of sample F showing the contact angle of the braze;
Figure 8: discloses an optical image of sample G showing the contact angle of the braze;

### DETAILED DESCRIPTION

According to one aspect of the present disclosure there is provided a body comprising;
a niobium carbide based cermet part containing a nickel based metallic binder;
a silver based braze alloy; and
at least one other part selected from a cermet, a cemented carbide or a part comprising a steel to which the cermet part is to be brazed to;
characterized in that the cennet part contains at least 0.5 atomic percent molybdenum.

Atomic percentage for the cermet part is calculated by taking the weight percentages (wt%) of the powders added, then using the respective molecular or atomic weights of the components of the powders added during the manufacture of the cermet part to calculate the relative atomic percentages (at%), for each element. Atomic percent is also known as atomic mol% fraction. For any carbide additions, the amounts have been broken down into their respective wt% fractions of the metal and carbon in order to calculate the atomic percentages of the individual elements.

The term wt% refers to the wt% of the each powder in comparison to the total powder composition. The positive effect of the molybdenum (Mo) addition on the brazeability of the cermet part is only seen if at least 0.5 at% Mo is added.

The inventors have surprisingly found that the addition of the molybdenum will greatly increase the brazeability of the cermet part, as will be seen from the examples. Without being bound by any one theory, it is believed that the added molybdenum will form part of the metallic binder phase and that the addition will make the metallic binder more soluble in the melted braze alloy and therefore a better and stronger braze joint will be formed.

A cermet is defined as being a material comprising a hard phase and a metallic binder phase. In the present disclosure the term "niobium carbide based hard phase" means that the hard phase contains more than 50 wt% niobium carbide particles based on the total amount of hard phase. Further, in the present disclosure the term "a nickel based metallic binder phase" means that the binder comprises more than 50 wt% nickel based on the total amount of the metallic binder phase. The binder may also comprise Co and Fe. It should also be appreciated that the nickel based metallic binder could be replaced with an iron based metallic binder and that small quantities of other carbides such as WC, TiC, TaC, HfC or VC, such as up to about 4 wt%, may be added for example to assist with grain refinement, improving toughness and / or improving hot hardness.

As is well known in the art, brazing is a process used to join or fuse parts comprising hard metal or metal together. During the process, heat is applied to a filler metal, e.g. a braze alloy, which will melt below the melting point of the parts being joined together.

In one embodiment of present disclosure, the cermet part has a molybdenum content of at least 1.0 at% as is shown in the examples, an even more positive effect on the brazeability of the cermet part is seen if the addition of molybdenum is at least 1.0 at%.

In one embodiment of the present disclosure, the molybdenum content of the cermet part is no greater than 10.6 at%, as the properties of the body may be further optimized by keeping the molybdenum addition to no greater than 10.6 at%. When higher quantities of molybdenum are added there is a risk of precipitation of molybdenum carbide. The presence of a second hard phase in the cermet, such as molybdenum carbide, could have a detrimental effect on wear, transverse rupture strength or issues with grain growth control.

According to the present invention, the braze alloy is a silver based braze alloy. In the present disclosure the term "silver based braze alloy" means that the braze alloy contains more than 50 at% silver based on the total amount of the braze alloy. The brazing alloy may comprise, 64 at% Ag, 26 at% Cu, 2 at% Ni, 2 at Mn and 6 at% In.

According to one embodiment, the at least one other part is two or more parts. According to yet another embodiment, at least one of the two parts at least one is a cermet. According to one embodiment of the body as defined herein above or hereinafter, the at least one other part is selected from a cermet, which could have the same composition or have a different composition as the cermet. The at least one other part may be selected from a cemented carbide or a part comprising a steel alloy.

The body may be used in the manufacture of products such as a drill bit, an insert or a saw tip. For example in the case of a drill bit, the working tip of the drill is the cermet part of the body which is brazed to a steel shank (the at least one other part).

Another aspect of the present disclosure relates to a method of brazing a niobium carbide based cermet part, which cermet part contains a nickel based metallic binder and at least 0.5 atomic percent molybdenum, to at least one other part selected from a cermet, a cemented carbide or a part comprising steel, the method comprising the steps of:
a. providing a hard phase powder comprising more than 50 wt% niobium carbide based on the total amount of the hard phase powder;
b. providing a metallic binder powder comprising more than 50 wt% nickel based of the total amount of the metallic binder powder;
c. mixing the hard phase powder and the metallic binder powder with an organic binder to obtain a powder mixture;
d. milling the obtained powder mixture;
e. pressing the milled powder mixture;
f. sintering the pressed powder mixture to obtain a sintered cermet part;
g. providing a silver based braze alloy; and
h. brazing the obtained sintered cermet part to at least one other part by using the silver based braze alloy;
wherein in step c. either:
a powder of molybdenum carbide is added or
a powder of a molybdenum and a powder of carbon are added
such that the cermet part contains at least 0.5 atomic percent molybdenum.

The hard phase powder and the metallic binder powder are milled together with an organic binder typically by using a ball mill. The organic binder is added to aid the pressing and is typically a poly(ethylene glycol) (PEG), such as PEG 34. Typically, then the powder formed into shape by using a pressing method, for example using a TOX press. Then after pressing, the powder mixture is sintered, for example using a Sinter HIP furnace. However, other milling, forming and sintering methods could be employed and other pressing aids could be used for the method of the present disclosure as described herein. As stated herein, the molybdenum is either added in the form of a molybdenum carbide powder or added, in equivalent atomic amounts, as a separate molybdenum powder and a separate carbon powder in step c.

According to one embodiment of the method as defined hereinabove or hereinafter, the weight percent (wt%) of the molybdenum carbide or total weight percent of molybdenum and carbon added is less than the weight percent of nickel of the total powder mixture. The term wt% refers to the wt% of each powder in comparison to the total powder composition, i.e. including the molybdenum carbide addition or the addition of molybdenum and carbon. It was found that if the weight percent of molybdenum carbide or total weight percent of molybdenum and carbon added exceeded the amount of nickel added, precipitations of undissolved molybdenum carbide were present.

According to one embodiment of the method as defined hereinabove or hereinafter, the combined weight percent of the nickel, molybdenum carbide and carbon added is of from 6 to 35 wt%, such as of from 8 to 30 wt% of the total powder mixture. The properties of the cermet part are optimised if the total weight percent of the nickel and molybdenum carbide is at least 6 wt%, such as least 8 wt% in order to form a fully dense cermet. The properties of the cermet are also optimised if the combined weight percent of the nickel, molybdenum carbide and carbon does not exceed 35 wt%, such as no greater than 30 wt%, the because if the metallic binder content in the cermet part is higher than this the contiguity of the material will be reduced, which would have a detrimental effect on the material properties such as a reduction in hardness and toughness.

According to the present invention as defined hereinabove or hereinafter the braze alloy is silver based.

According to the present invention as defined hereinabove or hereinafter the at least one other part is selected from a cermet, a cemented carbide or a part comprising a steel.

During the sintering process, molybdenum carbide dissolves in the metallic binder and will be present as molybdenum, rather than molybdenum carbide. If separate molybdenum and carbon powders are added, then both powders would dissolve in the binder. It would appear that in the sintered sample, a nickel-molybdenum based alloy metallic binder and only one hard phase, which is NbC of varying carbon stoichiometries, are formed.

The present disclosure also relates to the use of a cermet part, which cermet part comprises a niobium carbide based hard phase and a nickel based metallic binder and molybdenum for reducing a contact angle of a melted braze alloy when the cermet part is brazed to at least one other part by using a braze alloy. As is understood, a melted braze alloy is a braze alloy in its liquid form.

This is achieved by heating the braze alloy to slightly above its melting point temperature. The heating may be performed in a suitable protective atmosphere. The melted braze alloy will flow over the parts to be joined, this is known as wetting, the melted braze alloy and parts are then cooled to join the parts together.

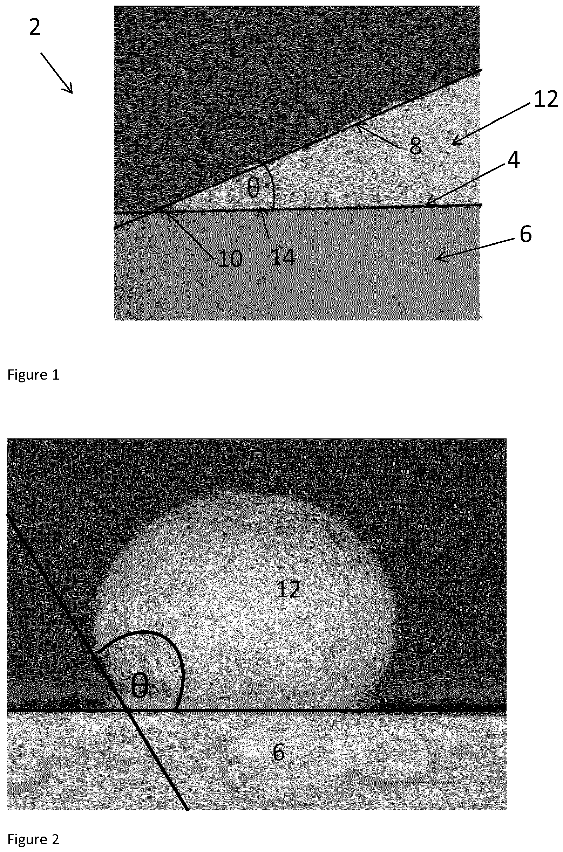

The contact angle, θ, is the angle where the melted braze alloy have contact with the surface upon which it is resting. As shown in figure 1, it is measured by taking an optical image of the melted braze on the surface after it has been cooled (2). A first line is drawn (4) along the surface on the cermet (6) and a second line drawn is drawn (8) extending from the contact point with the surface (10) of the melted braze (12). The angle between these two lines is then measured and this is the contact angle (14). A lower contact angle means better wetting of the melted braze alloy and therefore a better joint is achieved between the pieces to be joined. For improved brazeability, it is necessary to be able to reduce the contact angle to the lowest possible angle.

According to the present invention, the contact angle is reduced to less than 90°, such as less than or equal to 45°, such as less than or equal to 30°. A good wetting is said to have been achieved if the contact angle is less than 90°, if the angle is higher than 90°, then no wetting will occur and the two parts will not be joined together. According to one embodiment, the contact angle is reduced to less than 45°, such as less than 30°.

The shallower the contact angle, the larger the surface area of adhesion is and hence the stronger the braze joint obtained is.

According to the present invention, the melted braze alloy is silver based.

According to the present invention, the at least one other part used is selected from a cermet, a cemented carbide or a part comprising a steel.

The following examples are illustrative, non-limiting examples.

### EXAMPLES

Niobium carbide based cermets were prepared by pre-milling the niobium carbide for 20 hours. The pre-milled niobium carbide powder was weighed in, as were the nickel powder and the molybdenum carbide powder. These components were then milled with 1200g of milling media (cylpebs) with a charge: media mass ratio of 1:21 in ethanol for 8 hours with PEG 34. The obtained powder was then dried, sieved and pressed using the TOX press into pieces with dimensions of approximately 5.5 x 6.5 x 20 mm. The pieces were then vacuum sintered at a temperature of between 1410°C and 1450°C for 1 hour. The sintered pieces were then coarse ground on a diamond disk and sequentially polished on finer diamond slurries down to the final polish using 1µm diamond grit with a colloidal silica final stage polish.

For the brazeability trials pieces of 165 µm thick Johnson Matthey Metal Argobraze 64 foil, which is composed of 64 at% Ag, 26 at% Cu, 2 at% Ni, 2 at% Mn, 6 at% In, with a weight of approximately 0.02 g, were placed on the largest face of the sintered sample. The braze alloy was then covered in Johnson Matthey Easy-Flo flux to prevent oxidation. To test the brazeability, the samples were then placed in the centre of a copper coil, the copper coil was made from 2.5 turns of 5 mm diameter copper tubing with an inside diameter of 36 mm which was attached to a 15 kW Ambrel Ekoheat ES induction heater. For each test, the power was set to 100 volts and when turned on the time taken for the braze to melt was approximately 30 seconds. After the melt of the braze was visibly seen by human eye, the power was left on for a further 3 seconds and then switched off. Once the samples had completely cooled, the flux was removed using hot water and then an optical image of the polished cross-section of the melted braze was taken so that the contact angle (θ) could be measured.

Table 1 shows a summary of the compositions, as weighed in at the powder mixing stage, the atomic assays and the contact angles measured. Sample A marked with *is out of the invention).

**Table 1**

| **Sample** | **Amounts in weight percent (wt%)** | | | | | **Amounts in atomic percent (at%)** | | | | | | **Contact angle, θ(°)** |
|---|---|---|---|---|---|---|---|---|---|---|---|---|
| | **NbC (wt%)** | **Ni (wt%)** | **Mo₂C (wt%)** | **WC (wt%)** | **TiC (wt%)** | **Nb (at%)** | **C (at%)** | **W (at%)** | **Mo (at%)** | **Ti (at%)** | **Ni (at%)** | |
| **A_{*}** | 67.6 | 18.6 | 0 | 13.8 | 0 | 34.1 | 42.7 | 4.2 | 0 | 0 | 19.0 | 140 |
| **B** | 76.2 | 19.6 | 1.9 | 0 | 2.3 | 33.4 | 46.3 | 0 | 1.0 | 2.1 | 17.3 | 57 |
| **C** | 77.6 | 20.4 | 2.1 | 0 | 0 | 40.0 | 42.3 | 0 | 1.1 | 0 | 19.6 | 19 |
| **D** | 73.2 | 22.7 | 4.1 | 0 | 0 | 35.1 | 40.7 | 0 | 2.3 | 0 | 21.9 | 26 |
| **E** | 72.9 | 19.6 | 7.5 | 0 | 0 | 35.1 | 41.7 | 0 | 4.2 | 0 | 19 | 5 |
| **F** | 70.8 | 13.5 | 11.9 | 3.8 | 0 | 34.8 | 43.8 | 1.1 | 6.8 | 0 | 13.4 | 43 |
| **G** | 41.6 | 18.8 | 39.6 | 0 | 0 | 20.3 | 39.1 | 0 | 22.3 | 0 | 18.4 | 12 |

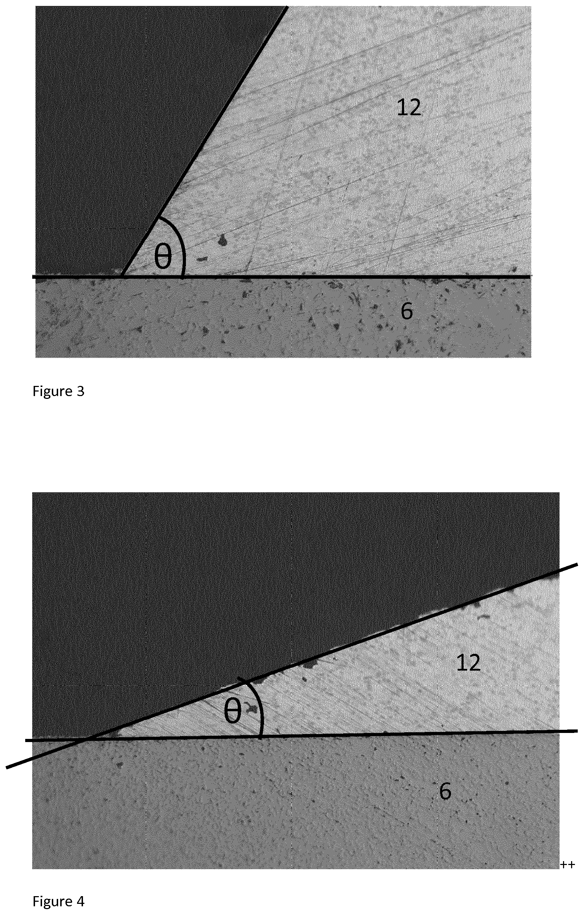

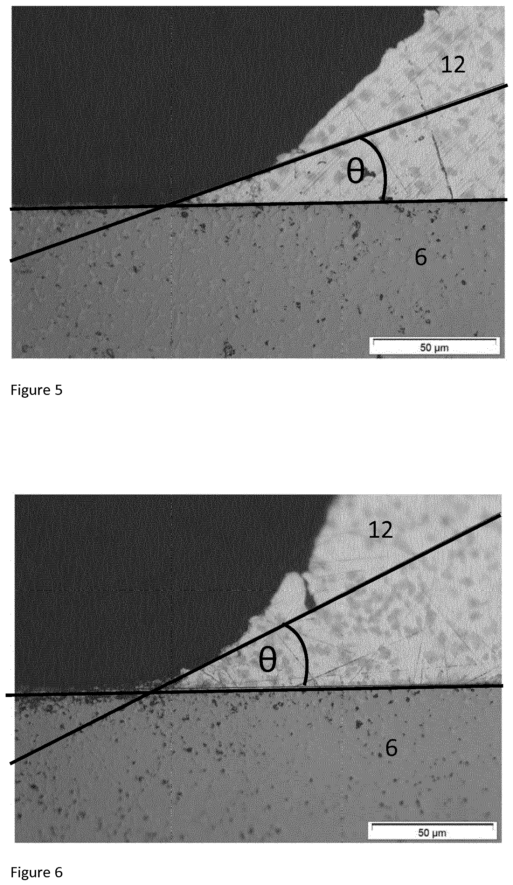

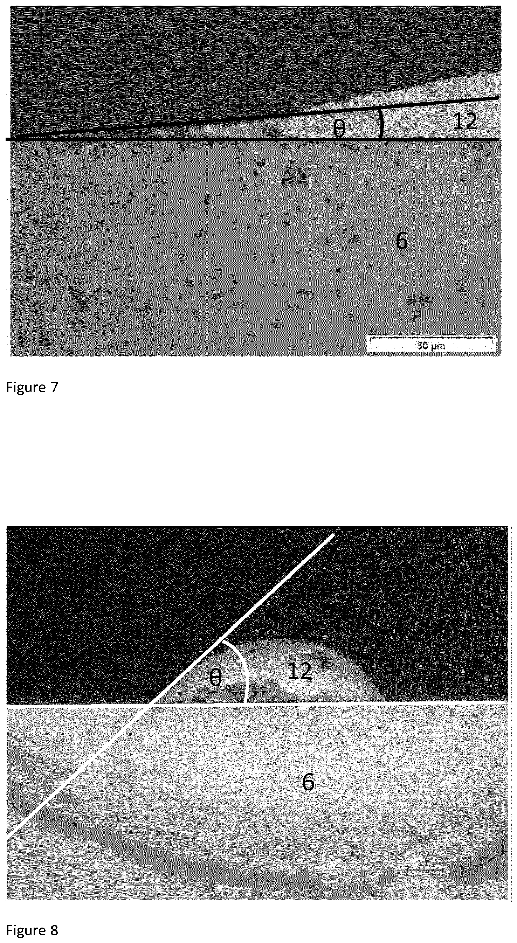

Optical microscopy images of the melted braze alloys were taken and the contact angles measured as shown in Figures 2-8 for samples A-G respectively. As can be seen in the above table, if no molybdenum carbide is added to the niobium carbide based cermet, the contact angle is >90° (sample A) and is therefore not wetted. However, when even a small amount of molybdenum carbide is added to the composition, the contact angle significantly drops below 90° and good wetting is achieved (samples B-G). The lowest contact angle achieved was when 4.2 at% of Mo was incorporated in the sintered sample.

It should also be noted that when a WC based cemented carbides with either a cobalt or nickel metallic binder is brazed using a silver based braze alloy, the contact angle of the melted braze alloy is less than or equal to 90° even without any further additions to the composition, Mo or otherwise, being required. This means that good wetting and brazeability is achieved without any further modifications to the cemented carbide composition being required.

If the quantity, in wt%, of molybdenum carbide added exceeds the quantity of nickel added then precipitations of molybdenum carbide in the hard phase were observed.

Additions of other carbides, such as WC, TiC, VC, Cr₃C₂ or ZrC, to the cermet part with a niobium carbide based hard phase and a nickel based metallic binder did not achieve the same effect. The positive effect of reducing the contact angle with the melted braze alloy is unique for Mo₂C.

## Claims

1. A body comprising:
a niobium carbide based cermet part containing a nickel based metallic binder;
a silver based braze alloy; and
at least one other part selected from a cermet, a cemented carbide or a part comprising a steel to which the cermet part is to be brazed to;
**characterized in that** the cermet part contains at least 0.5 atomic percent molybdenum.

2. The body according to claim 1, wherein the molybdenum content of the cermet part is at least 1.0 atomic percent.

3. The body according to claim 1 or claim 2, wherein the molybdenum content of the cermet part is no greater than 10.6 atomic percent.

4. A method of brazing a niobium carbide based cermet part, which cermet part contains a nickel based metallic binder and at least 0.5 atomic percent molybdenum, to at least one other part selected from a cermet, a cemented carbide or a part comprising steel, the method comprising the steps of:
a. providing a hard phase powder comprising more than 50 wt% niobium carbide based on the total amount of the hard phase powder;
b. providing a metallic binder powder comprising more than 50 wt% nickel based of the total amount of the metallic binder powder;
c. mixing the hard phase powder and the metallic binder powder with an organic binder to obtain a powder mixture;
d. milling the obtained powder mixture;
e. pressing the milled powder mixture;
f. sintering the pressed powder mixture to obtain a sintered cermet part;
g. providing a silver based braze alloy; and
h. brazing the obtained sintered cermet part to at least one other part by using the silver based braze alloy;
wherein in step c, either:
a powder of molybdenum carbide is added or
a powder of a molybdenum and a powder of carbon are added such that the cermet part contains at least 0.5 atomic percent molybdenum.

5. The method according to claim 4, wherein the weight percent of the molybdenum carbide or the combined weight percent of the molybdenum and the carbon added is less than the weight percent of nickel of the total powder mixture.

6. The method according to claim 4 or claim 5, wherein the combined weight percent of the nickel and the molybdenum carbide or the molybdenum and the carbon is between 6 and 35 weight percent of the total powder mixture.

7. A use of a niobium carbide based cermet part, said cermet containing a nickel based metallic binder and at least 0.5 atomic percent molybdenum, for reducing a contact angle of a melted braze alloy to less than 90° during a method wherein the cermet part is brazed to at least one other part selected from a cermet, a cemented carbide or a part comprising steel using a silver based braze alloy;
wherein the contact angle is the angle between a first line drawn along a surface of the cermet part and a second line drawn extending from the contact point with a surface of the melted braze alloy based on an optical image of the melted braze alloy on said surface after it has cooled and in a protective atmosphere.

8. The use according to claim 7, wherein the contact angle is reduced to less than or equal to 45°.

## Patentansprüche

1. Körper, umfassend:
einen Cermet-Teil auf Niobcarbidbasis, der ein metallisches Bindemittel auf Nickelbasis enthält;
eine Hartlötlegierung auf Silberbasis; und
mindestens einen anderen Teil, ausgewählt aus einem Cermet, einem Sintercarbid oder einem Teil, der einen Stahl umfasst, an den der Cermet-Teil hartgelötet werden soll;
**dadurch gekennzeichnet, dass** der Cermet-Teil mindestens 0,5 Atomprozent Molybdän enthält.

2. Körper nach Anspruch 1, wobei der Molybdängehalt des Cermet-Teils mindestens 1,0 Atomprozent beträgt.

3. Körper nach Anspruch 1 oder Anspruch 2, wobei der Molybdängehalt des Cermet-Teils nicht größer als 10,6 Atomprozent ist.

4. Verfahren zum Hartlöten eines Cermet-Teils auf Niobcarbidbasis, wobei dieser Cermet-Teil ein metallisches Bindemittel auf Nickelbasis und mindestens 0,5 Atomprozent Molybdän enthält, an mindestens einen anderen Teil, ausgewählt aus einem Cermet, einem Sintercarbid oder einem Teil, der Stahl umfasst, wobei das Verfahren die folgenden Schritte umfasst:
a. Bereitstellen eines Hartphasenpulvers, umfassend mehr als 50 Gew.-% Niobcarbid, basierend auf der Gesamtmenge des Hartphasenpulvers;
b. Bereitstellen eines metallischen Bindemittelpulvers, umfassend mehr als 50 Gew.-% Nickel, basierend auf der Gesamtmenge des metallischen Bindemittelpulvers;
c. Mischen des Hartphasenpulvers und des metallischen Bindemittelpulvers mit einem organischen Bindemittel, um eine Pulvermischung zu erhalten;
d. Mahlen der erhaltenen Pulvermischung;
e. Pressen der gemahlenen Pulvermischung;
f. Sintern der gepressten Pulvermischung, um einen gesinterten Cermet-Teil zu erhalten;
g. Bereitstellen einer Hartlötlegierung auf Silberbasis; und
h. Hartlöten des erhaltenen gesinterten Cermet-Teils an mindestens einen anderen Teil unter Verwendung der Hartlötlegierung auf Silberbasis,
wobei in Schritt c entweder
ein Pulver aus Molybdäncarbid zugesetzt wird oder
ein Pulver aus Molybdän und ein Pulver aus Kohlenstoff zugesetzt werden,
sodass der Cermet-Teil mindestens 0,5 Atomprozent Molybdän enthält.

5. Verfahren nach Anspruch 4, wobei der Gewichtsprozentanteil des Molybdäncarbids oder der kombinierte Gewichtsprozentanteil des Molybdäns und des zugesetzten Kohlenstoffs geringer ist als der Gewichtsprozentanteil von Nickel der gesamten Pulvermischung.

6. Verfahren nach Anspruch 4 oder Anspruch 5, wobei der kombinierte Gewichtsprozentanteil des Nickels und des Molybdäncarbids oder des Molybdäns und des Kohlenstoffs zwischen 6 und 35 Gewichtsprozent der gesamten Pulvermischung liegt.

7. Verwendung eines Cermet-Teils auf Niobcarbidbasis, wobei dieser Cermet-Teil ein metallisches Bindemittel auf Nickelbasis und mindestens 0,5 Atomprozent Molybdän enthält, zum Verringern eines Kontaktwinkels einer geschmolzenen Hartlötlegierung auf weniger als 90° während eines Verfahrens, bei dem der Cermet-Teil unter Verwendung einer Hartlötlegierung auf Silberbasis an mindestens einen anderen Teil, ausgewählt aus einem Cermet, einem Sintercarbid oder einem Teil, der Stahl umfasst, hartgelötet wird;
wobei der Kontaktwinkel der Winkel zwischen einer ersten Linie, die entlang einer Oberfläche des Cermet-Teils gezogen ist, und einer zweiten Linie, die so gezogen ist, dass sie sich von dem Kontaktpunkt mit einer Oberfläche der geschmolzenen Hartlötlegierung erstreckt, basierend auf einem optischen Bild der geschmolzenen Hartlötlegierung auf dieser Oberfläche, nachdem sie abgekühlt ist, und in einer Schutzatmosphäre, ist.

8. Verwendung nach Anspruch 7, wobei der Kontaktwinkel auf weniger als oder gleich 45° reduziert ist.

## Revendications

1. Corps comprenant :
une pièce en cermet à base de carbure de niobium contenant un liant métallique à base de nickel ;
un alliage de brasage à base d'argent ; et
au moins une autre pièce choisie parmi un cermet, un carbure cémenté ou une pièce comprenant un acier sur laquelle la pièce en cermet doit être brasée ;
**caractérisé en ce que** la pièce en cermet contient au moins 0,5 % atomique de molybdène.

2. Corps selon la revendication 1, dans lequel la teneur en molybdène de la pièce en cermet est d'au moins 1,0 % atomique.

3. Corps selon la revendication 1 ou la revendication 2, dans lequel la teneur en molybdène de la pièce en cermet n'est pas supérieure à 10,6 % atomique.

4. Procédé de brasage d'une pièce en cermet à base de carbure de niobium, laquelle pièce en cermet contient un liant métallique à base de nickel et au moins 0,5 % atomique de molybdène, sur au moins une autre pièce choisie parmi un cermet, un carbure cémenté ou une pièce comprenant un acier, le procédé comprenant les étapes consistant à :
a. fournir une poudre de phase dure comprenant plus de 50 % en poids de carbure de niobium sur la base de la quantité totale de la poudre de phase dure ;
b. fournir une poudre de liant métallique comprenant plus de 50 % en poids de nickel sur la base de la quantité totale de la poudre de liant métallique ;
c. mélanger la poudre de phase dure et la poudre de liant métallique avec un liant organique pour obtenir un mélange de poudres ;
d. broyer le mélange de poudres obtenu ;
e. comprimer le mélange de poudres broyé ;
f. fritter le mélange de poudres comprimé pour obtenir une pièce en cermet frittée ;
g. fournir un alliage de brasage à base d'argent ; et
h. braser la pièce en cermet frittée obtenue sur au moins une autre pièce en utilisant l'alliage de brasage à base d'argent ;
dans lequel à l'étape c, soit :
une poudre de carbure de molybdène est ajoutée, soit
une poudre de molybdène et une poudre de carbone sont ajoutées
de sorte que la pièce en cermet contient au moins 0,5 % atomique de molybdène.

5. Procédé selon la revendication 4, dans lequel le pourcentage en poids du carbure de molybdène ou le pourcentage en poids combiné de molybdène et de carbone ajoutés est inférieur au pourcentage en poids de nickel du mélange de poudres total.

6. Procédé selon la revendication 4 ou la revendication 5, dans lequel le pourcentage en poids combiné du nickel et du carbure de molybdène ou du molybdène et du carbone est compris entre 6 et 35 % en poids du mélange de poudres total.

7. Utilisation d'une pièce en cermet à base de carbure de niobium, ledit cermet contenant un liant métallique à base de nickel et au moins 0,5 % atomique de molybdène, pour réduire un angle de contact d'un alliage de brasage fondu à moins de 90° pendant un procédé dans lequel la pièce en cermet est brasée sur au moins une autre pièce choisie parmi un cermet, un carbure cémenté ou une pièce comprenant un acier en utilisant un alliage de brasage à base d'argent ;
dans laquelle l'angle de contact est l'angle entre une première ligne dessinée le long d'une surface de la pièce en cermet et une seconde ligne dessinée se prolongeant du point de contact avec une surface de l'alliage de brasage fondu sur la base d'une image optique de l'alliage de brasage fondu sur ladite surface après son refroidissement et sous une atmosphère protectrice.

8. Utilisation selon la revendication 7, dans laquelle l'angle de contact est réduit à 45° ou moins.
